# EUROPEAN PATENT APPLICATION

(11) **EP 4 486 023 A1**
(43) Date of publication of application: **01.01.2025**
(21) Application number: 23216935.9
(22) Date of filing: 14.12.2023
(51) Int. Cl.: H04W 60/04, H04W 76/15, H04W 84/12

(54) **CRITICAL UPDATES FOR NON-COLLOCATED AP MLDS**

(30) Priority: 28.06.2023 US 202318215376
(71) Applicant: INTEL Corporation, Santa Clara, CA 95054 (US)
(72) Inventor: CARIOU, Laurent, Santa Clara, 95054 (US); KENNEY, Thomas J., Santa Clara, 95054 (US)
(74) Representative: Rummler, Felix

(57) **Abstract**

Methods, apparatuses, and computer readable media for critical updates for access points (APs), the apparatus of a first AP of a non-collocated AP MLD, the apparatus comprising processing circuitry configured to: set a value of a non-collocated AP MLD critical update flag subfield to indicate 1, if there is a change to a value in a basic service set (BSS) parameter change count subfield of a MLD parameters field in a reduced neighbor report element for a second AP, the second AP affiliated with the non-collocated AP MLD, where the first AP and the second AP have a setup link for a non-AP MLD associated with the non-collocated AP MLD, and where the first AP and the second AP are part of a different collocated sets, and the processing circuitry further configured to encode for transmission a capability information field, the capability information field comprising the critical update flag subfield.

## Description

### TECHNICAL FIELD

Embodiments relate to critical updates for non-collocated access point (AP) multilink devices (MLDs), in accordance with wireless local area networks (WLANs) and Wi-Fi networks including networks operating in accordance with different versions or generations of the IEEE 802.11 family of standards.

### BACKGROUND

Efficient use of the resources of a wireless local-area network (WLAN) is important to provide bandwidth and acceptable response times to the users of the WLAN. However, often there are many devices trying to share the same resources and some devices may be limited by the communication protocol they use or by their hardware bandwidth. Moreover, wireless devices may need to operate with both newer protocols and with legacy device protocols.

### BRIEF DESCRIPTION OF THE DRAWINGS

The present disclosure is illustrated by way of example and not limitation in the figures of the accompanying drawings, in which like references indicate similar elements and in which:
FIG. 1 is a block diagram of a radio architecture in accordance with some embodiments;
FIG. 2 illustrates a front-end module circuitry for use in the radio architecture of FIG. 1 in accordance with some embodiments;
FIG. 3 illustrates a radio IC circuitry for use in the radio architecture of FIG. 1 in accordance with some embodiments;
FIG. 4 illustrates a baseband processing circuitry for use in the radio architecture of FIG. 1 in accordance with some embodiments;
FIG. 5 illustrates a WLAN in accordance with some embodiments;
FIG. 6 illustrates a block diagram of an example machine upon which any one or more of the techniques (e.g., methodologies) discussed herein may perform;
FIG. 7 illustrates a block diagram of an example wireless device upon which any one or more of the techniques (e.g., methodologies or operations) discussed herein may perform;
FIG. 8 illustrates multi-link devices (MLD)s, in accordance with some embodiments.
FIG. 9 illustrates collocated and non-collated MLDs, in accordance with some embodiments.
FIG. 10 illustrates a non-collocated MLD with signal reach, in accordance with some embodiments.
FIG. 11 illustrates a capabilities information field, in accordance with some examples.
FIG. 12 illustrates a reduced neighbor report element, in accordance with some examples.
FIG. 13 illustrates a method for critical updates for non-collocated AP MLDs, in accordance with some embodiments.
FIG. 14 illustrates a method for critical updates for non-collocated AP MLDs, in accordance with some embodiments.

### DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments. Embodiments set forth in the claims encompass all available equivalents of those claims.

Some embodiments relate to methods, computer readable media, and apparatus for adjusting the duration field on CTS frames. Some embodiments relate to methods, computer readable media, and apparatus for responding to adjustments to adjustments to the duration field of CTS frames.

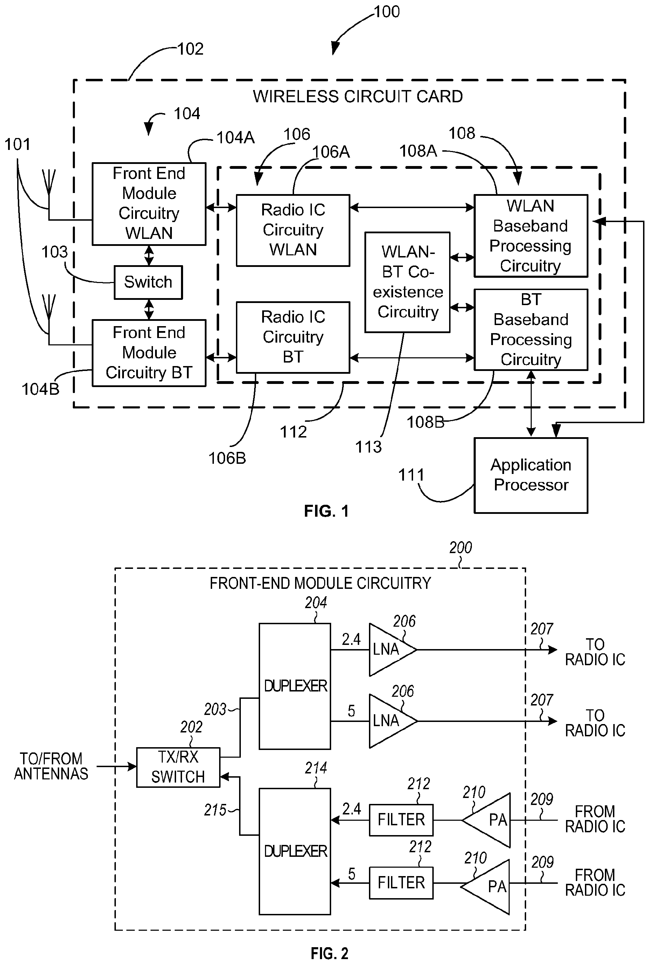

FIG. 1 is a block diagram of a radio architecture 100 in accordance with some embodiments. Radio architecture 100 may include radio front-end module (FEM) circuitry 104, radio IC circuitry 106 and baseband processing circuitry 108. Radio architecture 100 as shown includes both Wireless Local Area Network (WLAN) functionality and Bluetooth^{®} (BT) functionality although embodiments are not so limited. In this disclosure, "WLAN" and "Wi-Fi" are used interchangeably.

FEM circuitry 104 may include a WLAN or Wi-Fi FEM circuitry 104A and a Bluetooth^{®} (BT) FEM circuitry 104B. The WLAN FEM circuitry 104A may include a receive signal path comprising circuitry configured to operate on WLAN RF signals received from one or more antennas 101, to amplify the received signals and to provide the amplified versions of the received signals to the WLAN radio IC circuitry 106A for further processing. The BT FEM circuitry 104B may include a receive signal path which may include circuitry configured to operate on BT RF signals received from one or more antennas 101, to amplify the received signals and to provide the amplified versions of the received signals to the BT radio IC circuitry 106B for further processing. FEM circuitry 104A may also include a transmit signal path which may include circuitry configured to amplify WLAN signals provided by the radio IC circuitry 106A for wireless transmission by one or more of the antennas 101. In addition, FEM circuitry 104B may also include a transmit signal path which may include circuitry configured to amplify BT signals provided by the radio IC circuitry 106B for wireless transmission by the one or more antennas. In the embodiment of FIG. 1, although FEM circuitry 104A and FEM circuitry 104B are shown as being distinct from one another, embodiments are not so limited, and include within their scope the use of an FEM (not shown) that includes a transmit path and/or a receive path for both WLAN and BT signals, or the use of one or more FEM circuitries where at least some of the FEM circuitries share transmit and/or receive signal paths for both WLAN and BT signals.

Radio IC circuitry 106 as shown may include WLAN radio IC circuitry 106A and BT radio IC circuitry 106B. The WLAN radio IC circuitry 106A may include a receive signal path which may include circuitry to down-convert WLAN RF signals received from the FEM circuitry 104A and provide baseband signals to WLAN baseband processing circuitry 108A. BT radio IC circuitry 106B may in turn include a receive signal path which may include circuitry to down-convert BT RF signals received from the FEM circuitry 104B and provide baseband signals to BT baseband processing circuitry 108B. WLAN radio IC circuitry 106A may also include a transmit signal path which may include circuitry to up-convert WLAN baseband signals provided by the WLAN baseband processing circuitry 108A and provide WLAN RF output signals to the FEM circuitry 104A for subsequent wireless transmission by the one or more antennas 101. BT radio IC circuitry 106B may also include a transmit signal path which may include circuitry to up-convert BT baseband signals provided by the BT baseband processing circuitry 108B and provide BT RF output signals to the FEM circuitry 104B for subsequent wireless transmission by the one or more antennas 101. In the embodiment of FIG. 1, although radio IC circuitries 106A and 106B are shown as being distinct from one another, embodiments are not so limited, and include within their scope the use of a radio IC circuitry (not shown) that includes a transmit signal path and/or a receive signal path for both WLAN and BT signals, or the use of one or more radio IC circuitries where at least some of the radio IC circuitries share transmit and/or receive signal paths for both WLAN and BT signals.

Baseband processing circuity 108 may include a WLAN baseband processing circuitry 108A and a BT baseband processing circuitry 108B. The WLAN baseband processing circuitry 108A may include a memory, such as, for example, a set of RAM arrays in a Fast Fourier Transform or Inverse Fast Fourier Transform block (not shown) of the WLAN baseband processing circuitry 108A. Each of the WLAN baseband processing circuitry 108A and the BT baseband circuitry 108B may further include one or more processors and control logic to process the signals received from the corresponding WLAN or BT receive signal path of the radio IC circuitry 106, and to also generate corresponding WLAN or BT baseband signals for the transmit signal path of the radio IC circuitry 106. Each of the baseband processing circuitries 108A and 108B may further include physical layer (PHY) and medium access control layer (MAC) circuitry, and may further interface with application processor 111 for generation and processing of the baseband signals and for controlling operations of the radio IC circuitry 106.

Referring still to FIG. 1, according to the shown embodiment, WLAN-BT coexistence circuitry 113 may include logic providing an interface between the WLAN baseband processing circuitry 108A and the BT baseband circuitry 108B to enable use cases requiring WLAN and BT coexistence. In addition, a switch 103 may be provided between the WLAN FEM circuitry 104A and the BT FEM circuitry 104B to allow switching between the WLAN and BT radios according to application needs. In addition, although the antennas 101 are depicted as being respectively connected to the WLAN FEM circuitry 104A and the BT FEM circuitry 104B, embodiments include within their scope the sharing of one or more antennas as between the WLAN and BT FEMs, or the provision of more than one antenna connected to each of FEM circuitry 104A or FEM circuitry 104B.

In some embodiments, the front-end module circuitry 104, the radio IC circuitry 106, and baseband processing circuitry 108 may be provided on a single radio card, such as wireless radio card 102. In some other embodiments, the one or more antennas 101, the FEM circuitry 104 and the radio IC circuitry 106 may be provided on a single radio card. In some other embodiments, the radio IC circuitry 106 and the baseband processing circuitry 108 may be provided on a single chip or IC, such as IC 112.

In some embodiments, the wireless radio card 102 may include a WLAN radio card and may be configured for Wi-Fi communications, although the scope of the embodiments is not limited in this respect. In some of these embodiments, the radio architecture 100 may be configured to receive and transmit orthogonal frequency division multiplexed (OFDM) or orthogonal frequency division multiple access (OFDMA) communication signals over a multicarrier communication channel. The OFDM or OFDMA signals may comprise a plurality of orthogonal subcarriers.

In some of these multicarrier embodiments, radio architecture 100 may be part of a Wi-Fi communication station (STA) such as a wireless access point (AP), a base station or a mobile device including a Wi-Fi device. In some of these embodiments, radio architecture 100 may be configured to transmit and receive signals in accordance with specific communication standards and/or protocols, such as any of the Institute of Electrical and Electronics Engineers (IEEE) standards including, IEEE 802.11n-2009, IEEE 802.11-2012, IEEE 802.11-2016, IEEE 802.11ac, and/or IEEE 802.11ax standards and/or proposed specifications for WLANs, although the scope of embodiments is not limited in this respect. Radio architecture 100 may also be suitable to transmit and/or receive communications in accordance with other techniques and standards.

In some embodiments, the radio architecture 100 may be configured for high-efficiency (HE) Wi-Fi (HEW) communications in accordance with the IEEE 802.11ax standard. In these embodiments, the radio architecture 100 may be configured to communicate in accordance with an OFDMA technique, although the scope of the embodiments is not limited in this respect.

In some other embodiments, the radio architecture 100 may be configured to transmit and receive signals transmitted using one or more other modulation techniques such as spread spectrum modulation (e.g., direct sequence code division multiple access (DS-CDMA) and/or frequency hopping code division multiple access (FH-CDMA)), time-division multiplexing (TDM) modulation, and/or frequency-division multiplexing (FDM) modulation, although the scope of the embodiments is not limited in this respect.

In some embodiments, as further shown in FIG. 1, the BT baseband circuitry 108B may be compliant with a Bluetooth^{®} (BT) connectivity standard such as Bluetooth^{®}, Bluetooth^{®} 4.0 or Bluetooth^{®} 5.0, or any other iteration of the Bluetooth^{®} Standard. In embodiments that include BT functionality as shown for example in Fig. 1, the radio architecture 100 may be configured to establish a BT synchronous connection oriented (SCO) link and/or a BT low energy (BT LE) link. In some of the embodiments that include functionality, the radio architecture 100 may be configured to establish an extended SCO (eSCO) link for BT communications, although the scope of the embodiments is not limited in this respect. In some of these embodiments that include a BT functionality, the radio architecture may be configured to engage in a BT Asynchronous Connection-Less (ACL) communications, although the scope of the embodiments is not limited in this respect. In some embodiments, as shown in FIG. 1, the functions of a BT radio card and WLAN radio card may be combined on a single wireless radio card, such as single wireless radio card 102, although embodiments are not so limited, and include within their scope discrete WLAN and BT radio cards

In some embodiments, the radio architecture 100 may include other radio cards, such as a cellular radio card configured for cellular (e.g., 3GPP such as LTE, LTE-Advanced or 5G communications).

In some IEEE 802.11 embodiments, the radio architecture 100 may be configured for communication over various channel bandwidths including bandwidths having center frequencies of about 900 MHz, 2.4 GHz, 5 GHz, and bandwidths of about 1 MHz, 2 MHz, 2.5 MHz, 4 MHz, 5MHz, 8 MHz, 10 MHz, 16 MHz, 20 MHz, 40MHz, 80MHz (with contiguous bandwidths) or 80+80MHz (160MHz) (with non-contiguous bandwidths). In some embodiments, a 320 MHz channel bandwidth may be used. The scope of the embodiments is not limited with respect to the above center frequencies however.

FIG. 2 illustrates FEM circuitry 200 in accordance with some embodiments. The FEM circuitry 200 is one example of circuitry that may be suitable for use as the WLAN and/or BT FEM circuitry 104A/104B (FIG. 1), although other circuitry configurations may also be suitable.

In some embodiments, the FEM circuitry 200 may include a TX/RX switch 202 to switch between transmit mode and receive mode operation. The FEM circuitry 200 may include a receive signal path and a transmit signal path. The receive signal path of the FEM circuitry 200 may include a low-noise amplifier (LNA) 206 to amplify received RF signals 203 and provide the amplified received RF signals 207 as an output (e.g., to the radio IC circuitry 106 (FIG. 1)). The transmit signal path of the circuitry 200 may include a power amplifier (PA) to amplify input RF signals 209 (e.g., provided by the radio IC circuitry 106), and one or more filters 212, such as band-pass filters (BPFs), low-pass filters (LPFs) or other types of filters, to generate RF signals 215 for subsequent transmission (e.g., by one or more of the antennas 101 (FIG. 1)).

In some dual-mode embodiments for Wi-Fi communication, the FEM circuitry 200 may be configured to operate in either the 2.4 GHz frequency spectrum or the 5 GHz frequency spectrum. In these embodiments, the receive signal path of the FEM circuitry 200 may include a receive signal path duplexer 204 to separate the signals from each spectrum as well as provide a separate LNA 206 for each spectrum as shown. In these embodiments, the transmit signal path of the FEM circuitry 200 may also include a power amplifier 210 and a filter 212, such as a BPF, a LPF or another type of filter for each frequency spectrum and a transmit signal path duplexer 214 to provide the signals of one of the different spectrums onto a single transmit path for subsequent transmission by the one or more of the antennas 101 (FIG. 1). In some embodiments, BT communications may utilize the 2.4 GHZ signal paths and may utilize the same FEM circuitry 200 as the one used for WLAN communications.

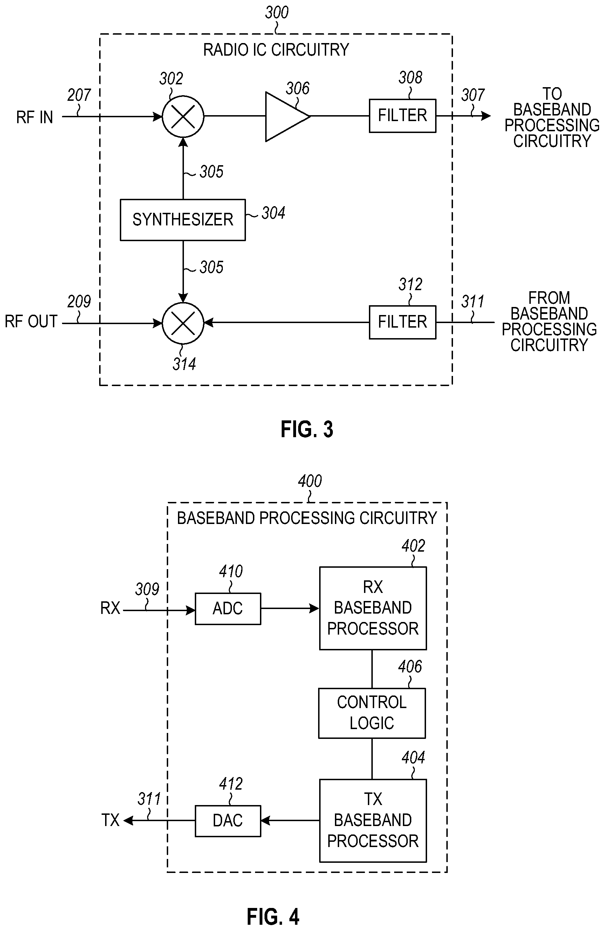

FIG. 3 illustrates radio integrated circuit (IC) circuitry 300 in accordance with some embodiments. The radio IC circuitry 300 is one example of circuitry that may be suitable for use as the WLAN or BT radio IC circuitry 106A/106B (FIG. 1), although other circuitry configurations may also be suitable.

In some embodiments, the radio IC circuitry 300 may include a receive signal path and a transmit signal path. The receive signal path of the radio IC circuitry 300 may include at least mixer circuitry 302, such as, for example, down-conversion mixer circuitry, amplifier circuitry 306 and filter circuitry 308. The transmit signal path of the radio IC circuitry 300 may include at least filter circuitry 312 and mixer circuitry 314, such as, for example, up-conversion mixer circuitry. Radio IC circuitry 300 may also include synthesizer circuitry 304 for synthesizing a frequency 305 for use by the mixer circuitry 302 and the mixer circuitry 314. The mixer circuitry 302 and/or 314 may each, according to some embodiments, be configured to provide direct conversion functionality. The latter type of circuitry presents a much simpler architecture as compared with standard super-heterodyne mixer circuitries, and any flicker noise brought about by the same may be alleviated for example through the use of OFDM modulation. Fig. 3 illustrates only a simplified version of a radio IC circuitry, and may include, although not shown, embodiments where each of the depicted circuitries may include more than one component. For instance, mixer circuitry 320 and/or 314 may each include one or more mixers, and filter circuitries 308 and/or 312 may each include one or more filters, such as one or more BPFs and/or LPFs according to application needs. For example, when mixer circuitries are of the direct-conversion type, they may each include two or more mixers.

In some embodiments, mixer circuitry 302 may be configured to down-convert RF signals 207 received from the FEM circuitry 104 (FIG. 1) based on the synthesized frequency 305 provided by synthesizer circuitry 304. The amplifier circuitry 306 may be configured to amplify the down-converted signals and the filter circuitry 308 may include a LPF configured to remove unwanted signals from the down-converted signals to generate output baseband signals 307. Output baseband signals 307 may be provided to the baseband processing circuitry 108 (FIG. 1) for further processing. In some embodiments, the output baseband signals 307 may be zero-frequency baseband signals, although this is not a requirement. In some embodiments, mixer circuitry 302 may comprise passive mixers, although the scope of the embodiments is not limited in this respect.

In some embodiments, the mixer circuitry 314 may be configured to up-convert input baseband signals 311 based on the synthesized frequency 305 provided by the synthesizer circuitry 304 to generate RF output signals 209 for the FEM circuitry 104. The baseband signals 311 may be provided by the baseband processing circuitry 108 and may be filtered by filter circuitry 312. The filter circuitry 312 may include a LPF or a BPF, although the scope of the embodiments is not limited in this respect.

In some embodiments, the mixer circuitry 302 and the mixer circuitry 314 may each include two or more mixers and may be arranged for quadrature down-conversion and/or up-conversion respectively with the help of synthesizer circuitry 304. In some embodiments, the mixer circuitry 302 and the mixer circuitry 314 may each include two or more mixers each configured for image rejection (e.g., Hartley image rejection). In some embodiments, the mixer circuitry 302 and the mixer circuitry 314 may be arranged for direct down-conversion and/or direct up-conversion, respectively. In some embodiments, the mixer circuitry 302 and the mixer circuitry 314 may be configured for super-heterodyne operation, although this is not a requirement.

Mixer circuitry 302 may comprise, according to one embodiment: quadrature passive mixers (e.g., for the in-phase (I) and quadrature phase (Q) paths). In such an embodiment, RF input signal 207 from Fig. 3 may be down-converted to provide I and Q baseband output signals to be sent to the baseband processor

Quadrature passive mixers may be driven by zero and ninety-degree time-varying LO switching signals provided by a quadrature circuitry which may be configured to receive a LO frequency (f_{LO}) from a local oscillator or a synthesizer, such as LO frequency 305 of synthesizer 304 (FIG. 3). In some embodiments, the LO frequency may be the carrier frequency, while in other embodiments, the LO frequency may be a fraction of the carrier frequency (e.g., one-half the carrier frequency, one-third the carrier frequency). In some embodiments, the zero and ninety-degree time-varying switching signals may be generated by the synthesizer, although the scope of the embodiments is not limited in this respect.

In some embodiments, the LO signals may differ in duty cycle (the percentage of one period in which the LO signal is high) and/or offset (the difference between start points of the period). In some embodiments, the LO signals may have a 25% duty cycle and a 50% offset. In some embodiments, each branch of the mixer circuitry (e.g., the in-phase (I) and quadrature phase (Q) path) may operate at a 25% duty cycle, which may result in a significant reduction is power consumption.

The RF input signal 207 (FIG. 2) may comprise a balanced signal, although the scope of the embodiments is not limited in this respect. The I and Q baseband output signals may be provided to low-nose amplifier, such as amplifier circuitry 306 (FIG. 3) or to filter circuitry 308 (FIG. 3).

In some embodiments, the output baseband signals 307 and the input baseband signals 311 may be analog baseband signals, although the scope of the embodiments is not limited in this respect. In some alternate embodiments, the output baseband signals 307 and the input baseband signals 311 may be digital baseband signals. In these alternate embodiments, the radio IC circuitry may include analog-to-digital converter (ADC) and digital-to-analog converter (DAC) circuitry.

In some dual-mode embodiments, a separate radio IC circuitry may be provided for processing signals for each spectrum, or for other spectrums not mentioned here, although the scope of the embodiments is not limited in this respect.

In some embodiments, the synthesizer circuitry 304 may be a fractional-N synthesizer or a fractional N/N+1 synthesizer, although the scope of the embodiments is not limited in this respect as other types of frequency synthesizers may be suitable. For example, synthesizer circuitry 304 may be a delta-sigma synthesizer, a frequency multiplier, or a synthesizer comprising a phase-locked loop with a frequency divider. According to some embodiments, the synthesizer circuitry 304 may include digital synthesizer circuitry. An advantage of using a digital synthesizer circuitry is that, although it may still include some analog components, its footprint may be scaled down much more than the footprint of an analog synthesizer circuitry. In some embodiments, frequency input into synthesizer circuity 304 may be provided by a voltage controlled oscillator (VCO), although that is not a requirement. A divider control input may further be provided by either the baseband processing circuitry 108 (FIG. 1) or the application processor 111 (FIG. 1) depending on the desired output frequency 305. In some embodiments, a divider control input (e.g., N) may be determined from a look-up table (e.g., within a Wi-Fi card) based on a channel number and a channel center frequency as determined or indicated by the application processor 111.

In some embodiments, synthesizer circuitry 304 may be configured to generate a carrier frequency as the output frequency 305, while in other embodiments, the output frequency 305 may be a fraction of the carrier frequency (e.g., one-half the carrier frequency, one-third the carrier frequency). In some embodiments, the output frequency 305 may be a LO frequency (f_{LO}).

FIG. 4 illustrates a functional block diagram of baseband processing circuitry 400 in accordance with some embodiments. The baseband processing circuitry 400 is one example of circuitry that may be suitable for use as the baseband processing circuitry 108 (FIG. 1), although other circuitry configurations may also be suitable. The baseband processing circuitry 400 may include a receive baseband processor (RX BBP) 402 for processing receive baseband signals 309 provided by the radio IC circuitry 106 (FIG. 1) and a transmit baseband processor (TX BBP) 404 for generating transmit baseband signals 311 for the radio IC circuitry 106. The baseband processing circuitry 400 may also include control logic 406 for coordinating the operations of the baseband processing circuitry 400.

In some embodiments (e.g., when analog baseband signals are exchanged between the baseband processing circuitry 400 and the radio IC circuitry 106), the baseband processing circuitry 400 may include ADC 410 to convert analog baseband signals received from the radio IC circuitry 106 to digital baseband signals for processing by the RX BBP 402. In these embodiments, the baseband processing circuitry 400 may also include DAC 412 to convert digital baseband signals from the TX BBP 404 to analog baseband signals.

In some embodiments that communicate OFDM signals or OFDMA signals, such as through baseband processing circuitry 108A, the transmit baseband processor 404 may be configured to generate OFDM or OFDMA signals as appropriate for transmission by performing an inverse fast Fourier transform (IFFT). The receive baseband processor 402 may be configured to process received OFDM signals or OFDMA signals by performing an FFT. In some embodiments, the receive baseband processor 402 may be configured to detect the presence of an OFDM signal or OFDMA signal by performing an autocorrelation, to detect a preamble, such as a short preamble, and by performing a cross-correlation, to detect a long preamble. The preambles may be part of a predetermined frame structure for Wi-Fi communication.

Referring to FIG. 1, in some embodiments, the antennas 101 (FIG. 1) may each comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas may be effectively separated to take advantage of spatial diversity and the different channel characteristics that may result. Antennas 101 may each include a set of phased-array antennas, although embodiments are not so limited.

Although the radio architecture 100 is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

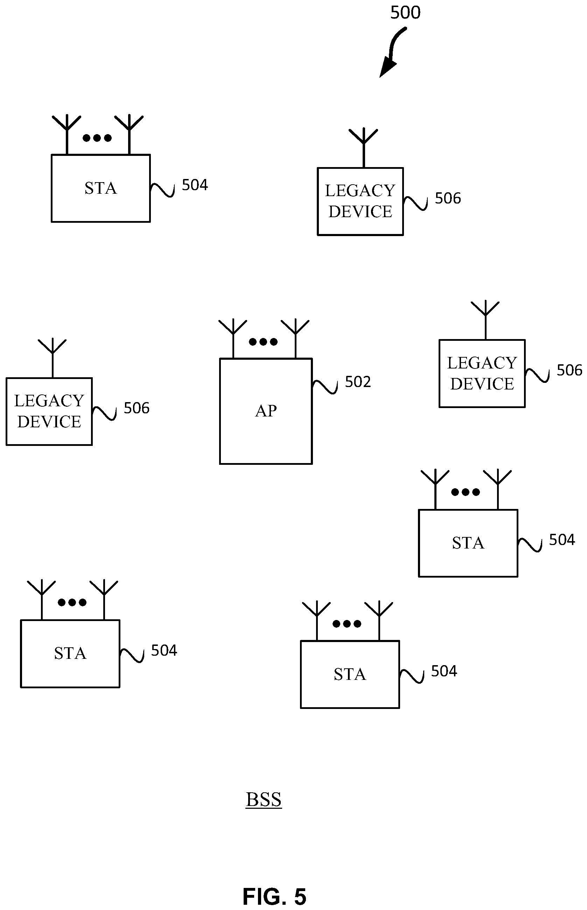

FIG. 5 illustrates a WLAN 500 in accordance with some embodiments. The WLAN 500 may comprise a basis service set (BSS) that may include an access point (AP) 502, a plurality of stations (STAs) 504, and a plurality of legacy devices 506. In some embodiments, the STAs 504 and/or AP 502 are configured to operate in accordance with IEEE 802.11be extremely high throughput (EHT) and/or high efficiency (HE) IEEE 802.11ax. In some embodiments, the STAs 504 and/or AP 502 are configured to operate in accordance with IEEE 802.11az. In some embodiments, the STAs 504 and/or AP 502 are configured to operate in accordance with IEEE 802.11EHT may be termed Next Generation 802.11 and/or IEEE P802.11be^{™}/D3.0, January 2023 and/or IEEE P802.11-REVme^{™}/D2.0, October 2022, both of which are hereby included by reference in their entirety.

The AP 502 may be an AP using the IEEE 802.11 to transmit and receive. The AP 502 may be a base station. The AP 502 may use other communications protocols as well as the IEEE 802.11 protocol. The EHT protocol may be termed a different name in accordance with some embodiments. The IEEE 802.11 protocol may include using orthogonal frequency division multiple-access (OFDMA), time division multiple access (TDMA), and/or code division multiple access (CDMA). The IEEE 802.11 protocol may include a multiple access technique. For example, the IEEE 802.11 protocol may include space-division multiple access (SDMA) and/or multiple-user multiple-input multiple-output (MU-MIMO). There may be more than one EHT AP 502 that is part of an extended service set (ESS). A controller (not illustrated) may store information that is common to the more than one APs 502 and may control more than one BSS, e.g., assign primary channels, colors, etc. AP 502 may be connected to the internet.

The legacy devices 506 may operate in accordance with one or more of IEEE 802.11 a/b/g/n/ac/ad/af/ah/aj/ay/ax, or another legacy wireless communication standard. The legacy devices 506 may be STAs or IEEE STAs. The STAs 504 may be wireless transmit and receive devices such as cellular telephone, portable electronic wireless communication devices, smart telephone, handheld wireless device, wireless glasses, wireless watch, wireless personal device, tablet, or another device that may be transmitting and receiving using the IEEE 802.11 protocol such as IEEE 802.11be or another wireless protocol.

The AP 502 may communicate with legacy devices 506 in accordance with legacy IEEE 802.11 communication techniques. In example embodiments, the H AP 502 may also be configured to communicate with STAs 504 in accordance with legacy IEEE 802.11 communication techniques.

In some embodiments, a HE or EHT frames may be configurable to have the same bandwidth as a channel. The HE or EHT frame may be a physical Layer Convergence Procedure (PLCP) Protocol Data Unit (PPDU). In some embodiments, PPDU may be an abbreviation for physical layer protocol data unit (PPDU). In some embodiments, there may be different types of PPDUs that may have different fields and different physical layers and/or different media access control (MAC) layers. For example, a single user (SU) PPDU, multiple-user (MU) PPDU, extended-range (ER) SU PPDU, and/or trigger-based (TB) PPDU. In some embodiments EHT may be the same or similar as HE PPDUs.

The bandwidth of a channel may be 20MHz, 40MHz, or 80MHz, 80+80MHz, 160MHz, 160+160MHz, 320MHz, 320+320MHz, 640MHz bandwidths. In some embodiments, the bandwidth of a channel less than 20 MHz may be 1 MHz, 1.25MHz, 2.03MHz, 2.5MHz, 4.06 MHz, 5MHz and 10MHz, or a combination thereof or another bandwidth that is less or equal to the available bandwidth may also be used. In some embodiments the bandwidth of the channels may be based on a number of active data subcarriers. In some embodiments the bandwidth of the channels is based on 26, 52, 106, 242, 484, 996, or 2x996 active data subcarriers or tones that are spaced by 20 MHz. In some embodiments the bandwidth of the channels is 256 tones spaced by 20 MHz. In some embodiments the channels are multiple of 26 tones or a multiple of 20 MHz. In some embodiments a 20 MHz channel may comprise 242 active data subcarriers or tones, which may determine the size of a Fast Fourier Transform (FFT). An allocation of a bandwidth or a number of tones or sub-carriers may be termed a resource unit (RU) allocation in accordance with some embodiments.

In some embodiments, the 26-subcarrier RU and 52-subcarrier RU are used in the 20 MHz, 40 MHz, 80 MHz, 160 MHz and 80+80 MHz OFDMA HE PPDU formats. In some embodiments, the 106-subcarrier RU is used in the 20 MHz, 40 MHz, 80 MHz, 160 MHz and 80+80 MHz OFDMA and MU-MIMO HE PPDU formats. In some embodiments, the 242-subcarrier RU is used in the 40 MHz, 80 MHz, 160 MHz and 80+80 MHz OFDMA and MU-MIMO HE PPDU formats. In some embodiments, the 484-subcarrier RU is used in the 80 MHz, 160 MHz and 80+80 MHz OFDMA and MU-MIMO HE PPDU formats. In some embodiments, the 996-subcarrier RU is used in the 160 MHz and 80+80 MHz OFDMA and MU-MIMO HE PPDU formats.

A HE or EHT frame may be configured for transmitting a number of spatial streams, which may be in accordance with MU-MIMO and may be in accordance with OFDMA. In other embodiments, the AP 502, STA 504, and/or legacy device 506 may also implement different technologies such as code division multiple access (CDMA) 2000, CDMA 2000 1X, CDMA 2000 Evolution-Data Optimized (EV-DO), Interim Standard 2000 (IS-2000), Interim Standard 95 (IS-95), Interim Standard 856 (IS-856), Long Term Evolution (LTE), Global System for Mobile communications (GSM), Enhanced Data rates for GSM Evolution (EDGE), GSM EDGE (GERAN), IEEE 802.16 (i.e., Worldwide Interoperability for Microwave Access (WiMAX)), Bluetooth^{®®}, low-power Bluetooth^{®®}, or other technologies.

In accordance with some IEEE 802.11 embodiments, e.g, IEEE 802.11EHT/ax/be embodiments, a HE AP 502 may operate as a master station which may be arranged to contend for a wireless medium (e.g., during a contention period) to receive exclusive control of the medium for a transmission opportunity (TXOP). The AP 502 may transmit an EHT/HE trigger frame transmission, which may include a schedule for simultaneous LTL/DL transmissions from STAs 504. The AP 502 may transmit a time duration of the TXOP and sub-channel information. During the TXOP, STAs 504 may communicate with the AP 502 in accordance with a non-contention based multiple access technique such as OFDMA or MU-MIMO. This is unlike conventional WLAN communications in which devices communicate in accordance with a contention-based communication technique, rather than a multiple access technique. During the HE or EHT control period, the AP 502 may communicate with stations 504 using one or more HE or EHT frames. During the TXOP, the HE STAs 504 may operate on a sub-channel smaller than the operating range of the AP 502. During the TXOP, legacy stations refrain from communicating. The legacy stations may need to receive the communication from the HE AP 502 to defer from communicating.

In accordance with some embodiments, during the TXOP the STAs 504 may contend for the wireless medium with the legacy devices 506 being excluded from contending for the wireless medium during the master-sync transmission. In some embodiments the trigger frame may indicate an UL-MU-MIMO and/or UL OFDMA TXOP. In some embodiments, the trigger frame may include a DL UL-MU-MIMO and/or DL OFDMA with a schedule indicated in a preamble portion of trigger frame.

In some embodiments, the multiple-access technique used during the HE or EHT TXOP may be a scheduled OFDMA technique, although this is not a requirement. In some embodiments, the multiple access technique may be a time-division multiple access (TDMA) technique or a frequency division multiple access (FDMA) technique. In some embodiments, the multiple access technique may be a space-division multiple access (SDMA) technique. In some embodiments, the multiple access technique may be a Code division multiple access (CDMA).

The AP 502 may also communicate with legacy devices 506 and/or STAs 504 in accordance with legacy IEEE 802.11 communication techniques. In some embodiments, the AP 502 may also be configurable to communicate with STAs 504 outside the TXOP in accordance with legacy IEEE 802.11 or IEEE 802.11EHT/ax communication techniques, although this is not a requirement.

In some embodiments the STA 504 may be a "group owner" (GO) for peer-to-peer modes of operation. A wireless device may be a STA 504 or a HE AP 502. The STA 504 may be termed a non-access point (AP)(non-AP) STA 504, in accordance with some embodiments.

In some embodiments, the STA 504 and/or AP 502 may be configured to operate in accordance with IEEE 802.11mc. In example embodiments, the radio architecture of FIG. 1 is configured to implement the STA 504 and/or the AP 502. In example embodiments, the front-end module circuitry of FIG. 2 is configured to implement the STA 504 and/or the AP 502. In example embodiments, the radio IC circuitry of FIG. 3 is configured to implement the HE station 504 and/or the AP 502. In example embodiments, the base-band processing circuitry of FIG. 4 is configured to implement the STA 504 and/or the AP 502.

In example embodiments, the STAs 504, AP 502, an apparatus of the STA 504, and/or an apparatus of the AP 502 may include one or more of the following: the radio architecture of FIG. 1, the front-end module circuitry of FIG. 2, the radio IC circuitry of FIG. 3, and/or the base-band processing circuitry of FIG. 4.

In example embodiments, the radio architecture of FIG. 1, the front-end module circuitry of FIG. 2, the radio IC circuitry of FIG. 3, and/or the base-band processing circuitry of FIG. 4 may be configured to perform the methods and operations/functions herein described in conjunction with FIGS. 1-14.

In example embodiments, the STAs 504 and/or the AP 502 are configured to perform the methods and operations/functions described herein in conjunction with FIGS. 1-14. In example embodiments, an apparatus of the STA 504 and/or an apparatus of the AP 502 are configured to perform the methods and functions described herein in conjunction with FIGS. 1-14. The term Wi-Fi may refer to one or more of the IEEE 802.11 communication standards. AP and STA may refer to EHT/HE access point and/or EHT/HE station as well as legacy devices 506.

In some embodiments, a HE AP STA may refer to an AP 502 and/or STAs 504 that are operating as EHT APs 502. In some embodiments, when a STA 504 is not operating as an AP, it may be referred to as a non-AP STA or non-AP. In some embodiments, STA 504 may be referred to as either an AP STA or a non-AP. The AP 502 may be part of a non-collocated AP MLD, e.g., non-collocated AP MLD3 912, collocated AP MLD1 904, or collocated AP MLD2 908. The STAs 504 may be part of a non-AP MLD such as ML non-AP logical entity 809. The BSS may be part of an extended service set (ESS), which may include multiple APs and may include one or more management devices.

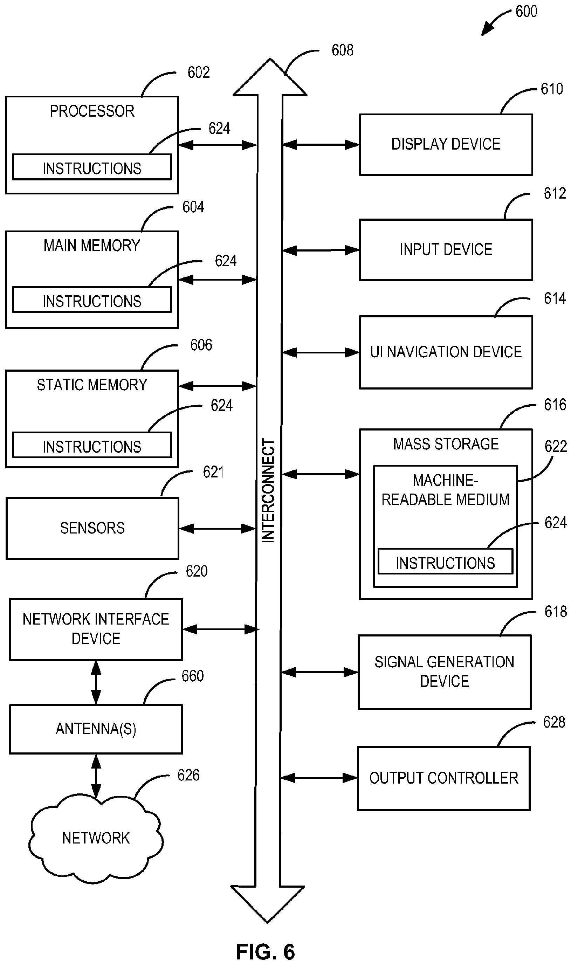

FIG. 6 illustrates a block diagram of an example machine 600 upon which any one or more of the techniques (e.g., methodologies) discussed herein may perform. In alternative embodiments, the machine 600 may operate as a standalone device or may be connected (e.g., networked) to other machines. In a networked deployment, the machine 600 may operate in the capacity of a server machine, a client machine, or both in server-client network environments. In an example, the machine 600 may act as a peer machine in peer-to-peer (P2P) (or other distributed) network environment. The machine 600 may be a HE AP 502, EVT station 504, personal computer (PC), a tablet PC, a set-top box (STB), a personal digital assistant (PDA), a portable communications device, a mobile telephone, a smart phone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

Machine (e.g., computer system) 600 may include a hardware processor 602 (e.g., a central processing unit (CPU), a graphics processing unit (GPU), a hardware processor core, or any combination thereof), a main memory 604 and a static memory 606, some or all of which may communicate with each other via an interlink (e.g., bus) 608.

Specific examples of main memory 604 include Random Access Memory (RAM), and semiconductor memory devices, which may include, in some embodiments, storage locations in semiconductors such as registers. Specific examples of static memory 606 include non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; RAM; and CD-ROM and DVD-ROM disks.

The machine 600 may further include a display device 610, an input device 612 (e.g., a keyboard), and a user interface (UI) navigation device 614 (e.g., a mouse). In an example, the display device 610, input device 612 and UI navigation device 614 may be a touch screen display. The machine 600 may additionally include a mass storage (e.g., drive unit) 616, a signal generation device 618 (e.g., a speaker), a network interface device 620, and one or more sensors 621, such as a global positioning system (GPS) sensor, compass, accelerometer, or other sensor. The machine 600 may include an output controller 628, such as a serial (e.g., universal serial bus (USB), parallel, or other wired or wireless (e.g., infrared(IR), near field communication (NFC), etc.) connection to communicate or control one or more peripheral devices (e.g., a printer, card reader, etc.). In some embodiments the processor 602 and/or instructions 624 may comprise processing circuitry and/or transceiver circuitry.

The mass storage 616 device may include a machine readable medium 622 on which is stored one or more sets of data structures or instructions 624 (e.g., software) embodying or utilized by any one or more of the techniques or functions described herein. The instructions 624 may also reside, completely or at least partially, within the main memory 604, within static memory 606, or within the hardware processor 602 during execution thereof by the machine 600. In an example, one or any combination of the hardware processor 602, the main memory 604, the static memory 606, or the mass storage 616 device may constitute machine readable media.

Specific examples of machine readable media may include: non-volatile memory, such as semiconductor memory devices (e.g., EPROM or EEPROM) and flash memory devices; magnetic disks, such as internal hard disks and removable disks; magneto-optical disks; RAM; and CD-ROM and DVD-ROM disks.

While the machine readable medium 622 is illustrated as a single medium, the term "machine readable medium" may include a single medium or multiple media (e.g., a centralized or distributed database, and/or associated caches and servers) configured to store the one or more instructions 624.

An apparatus of the machine 600 may be one or more of a hardware processor 602 (e.g., a central processing unit (CPU), a graphics processing unit (GPU), a hardware processor core, or any combination thereof), a main memory 604 and a static memory 606, sensors 621, network interface device 620, antennas 660, a display device 610, an input device 612, a UI navigation device 614, a mass storage 616, instructions 624, a signal generation device 618, and an output controller 628. The apparatus may be configured to perform one or more of the methods and/or operations disclosed herein. The apparatus may be intended as a component of the machine 600 to perform one or more of the methods and/or operations disclosed herein, and/or to perform a portion of one or more of the methods and/or operations disclosed herein. In some embodiments, the apparatus may include a pin or other means to receive power. In some embodiments, the apparatus may include power conditioning hardware.

The term "machine readable medium" may include any medium that is capable of storing, encoding, or carrying instructions for execution by the machine 600 and that cause the machine 600 to perform any one or more of the techniques of the present disclosure, or that is capable of storing, encoding or carrying data structures used by or associated with such instructions. Non-limiting machine readable medium examples may include solid-state memories, and optical and magnetic media. Specific examples of machine readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); and CD-ROM and DVD-ROM disks. In some examples, machine readable media may include non-transitory machine-readable media. In some examples, machine readable media may include machine readable media that is not a transitory propagating signal.

The instructions 624 may further be transmitted or received over a communications network 626 using a transmission medium via the network interface device 620 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, a Long Term Evolution (LTE) family of standards, a Universal Mobile Telecommunications System (UMTS) family of standards, peer-to-peer (P2P) networks, among others.

In an example, the network interface device 620 may include one or more physical jacks (e.g., Ethernet, coaxial, or phone jacks) or one or more antennas to connect to the communications network 626. In an example, the network interface device 620 may include one or more antennas 660 to wirelessly communicate using at least one of single-input multiple-output (SIMO), multiple-input multiple-output (MIMO), or multiple-input single-output (MISO) techniques. In some examples, the network interface device 620 may wirelessly communicate using Multiple User MIMO techniques. The term "transmission medium" shall be taken to include any intangible medium that is capable of storing, encoding or carrying instructions for execution by the machine 600, and includes digital or analog communications signals or other intangible medium to facilitate communication of such software.

Examples, as described herein, may include, or may operate on, logic or a number of components, modules, or mechanisms. Modules are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside on a machine readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time.

Some embodiments may be implemented fully or partially in software and/or firmware. This software and/or firmware may take the form of instructions contained in or on a non-transitory computer-readable storage medium. Those instructions may then be read and executed by one or more processors to enable performance of the operations described herein. The instructions may be in any suitable form, such as but not limited to source code, compiled code, interpreted code, executable code, static code, dynamic code, and the like. Such a computer-readable medium may include any tangible non-transitory medium for storing information in a form readable by one or more computers, such as but not limited to read only memory (ROM); random access memory (RAM); magnetic disk storage media; optical storage media; flash memory, etc.

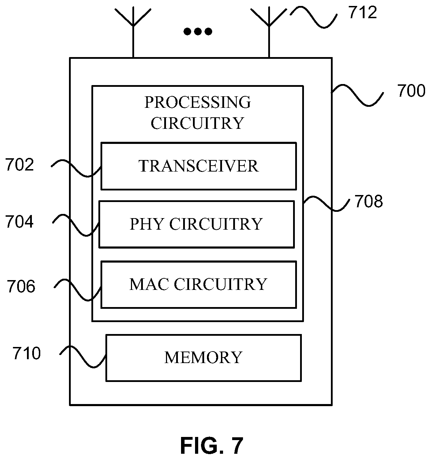

FIG. 7 illustrates a block diagram of an example wireless device 700 upon which any one or more of the techniques (e.g., methodologies or operations) discussed herein may perform. The wireless device 700 may be a HE device or HE wireless device. The wireless device 700 may be a HE STA 504, HE AP 502, and/or a HE STA or HE AP. A HE STA 504, HE AP 502, and/or a HE AP or HE STA may include some or all of the components shown in FIGS. 1-7. The wireless device 700 may be an example machine 600 as disclosed in conjunction with FIG. 6.

The wireless device 700 may include processing circuitry 708. The processing circuitry 708 may include a transceiver 702, physical layer circuitry (PHY circuitry) 704, and MAC layer circuitry (MAC circuitry) 706, one or more of which may enable transmission and reception of signals to and from other wireless devices 700 (e.g., HE AP 502, HE STA 504, and/or legacy devices 506) using one or more antennas 712. As an example, the PHY circuitry 704 may perform various encoding and decoding functions that may include formation of baseband signals for transmission and decoding of received signals. As another example, the transceiver 702 may perform various transmission and reception functions such as conversion of signals between a baseband range and a Radio Frequency (RF) range.

Accordingly, the PHY circuitry 704 and the transceiver 702 may be separate components or may be part of a combined component, e.g., processing circuitry 708. In addition, some of the described functionality related to transmission and reception of signals may be performed by a combination that may include one, any or all of the PHY circuitry 704 the transceiver 702, MAC circuitry 706, memory 710, and other components or layers. The MAC circuitry 706 may control access to the wireless medium. The wireless device 700 may also include memory 710 arranged to perform the operations described herein, e.g., some of the operations described herein may be performed by instructions stored in the memory 710.

The antennas 712 (some embodiments may include only one antenna) may comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas 712 may be effectively separated to take advantage of spatial diversity and the different channel characteristics that may result.

One or more of the memory 710, the transceiver 702, the PHY circuitry 704, the MAC circuitry 706, the antennas 712, and/or the processing circuitry 708 may be coupled with one another. Moreover, although memory 710, the transceiver 702, the PHY circuitry 704, the MAC circuitry 706, the antennas 712 are illustrated as separate components, one or more of memory 710, the transceiver 702, the PHY circuitry 704, the MAC circuitry 706, the antennas 712 may be integrated in an electronic package or chip.

In some embodiments, the wireless device 700 may be a mobile device as described in conjunction with FIG. 6. In some embodiments the wireless device 700 may be configured to operate in accordance with one or more wireless communication standards as described herein (e.g., as described in conjunction with FIGS. 1-6, IEEE 802.11). In some embodiments, the wireless device 700 may include one or more of the components as described in conjunction with FIG. 6 (e.g., display device 610, input device 612, etc.) Although the wireless device 700 is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

In some embodiments, an apparatus of or used by the wireless device 700 may include various components of the wireless device 700 as shown in FIG. 7 and/or components from FIGS. 1-6. Accordingly, techniques and operations described herein that refer to the wireless device 700 may be applicable to an apparatus for a wireless device 700 (e.g., HE AP 502 and/or HE STA 504), in some embodiments. In some embodiments, the wireless device 700 is configured to decode and/or encode signals, packets, and/or frames as described herein, e.g., PPDUs.

In some embodiments, the MAC circuitry 706 may be arranged to contend for a wireless medium during a contention period to receive control of the medium for a HE TXOP and encode or decode an HE PPDU. In some embodiments, the MAC circuitry 706 may be arranged to contend for the wireless medium based on channel contention settings, a transmitting power level, and a clear channel assessment level (e.g., an energy detect level).

The PHY circuitry 704 may be arranged to transmit signals in accordance with one or more communication standards described herein. For example, the PHY circuitry 704 may be configured to transmit a HE PPDU. The PHY circuitry 704 may include circuitry for modulation/demodulation, upconversion/downconversion, filtering, amplification, etc. In some embodiments, the processing circuitry 708 may include one or more processors. The processing circuitry 708 may be configured to perform functions based on instructions being stored in a RAM or ROM, or based on special purpose circuitry. The processing circuitry 708 may include a processor such as a general purpose processor or special purpose processor. The processing circuitry 708 may implement one or more functions associated with antennas 712, the transceiver 702, the PHY circuitry 704, the MAC circuitry 706, and/or the memory 710. In some embodiments, the processing circuitry 708 may be configured to perform one or more of the functions/operations and/or methods described herein.

In mmWave technology, communication between a station (e.g., the HE stations 504 of FIG. 5 or wireless device 700) and an access point (e.g., the HE AP 502 of FIG. 5 or wireless device 700) may use associated effective wireless channels that are highly directionally dependent. To accommodate the directionality, beamforming techniques may be utilized to radiate energy in a certain direction with certain beamwidth to communicate between two devices. The directed propagation concentrates transmitted energy toward a target device in order to compensate for significant energy loss in the channel between the two communicating devices. Using directed transmission may extend the range of the millimeter-wave communication versus utilizing the same transmitted energy in omni-directional propagation.

A technical problem is how to communicate with STAs and other devices that may only listen to one frequency band at a time but are associated with more than one frequency band. Some embodiments enable MLDs to ensure that STAs and other wireless devices communicating with the MLD do not miss important fields or elements. Some STAs or other wireless devices communicating with the MLD may be associated with the MLD on several different frequency bands, but only receiving or listening to one frequency band. The MLD and the STA or other wireless device, however, may need to follow procedures communicated on other frequency bands of the MLD. Embodiments include fields or elements transmitted by a first AP of the MLD operating on first frequency band being transmitted by other APs operating on different frequency bands. In this STAs and other wireless devices can follow the procedures, if any, as if the STA or other wireless device received the field or element from the first AP.

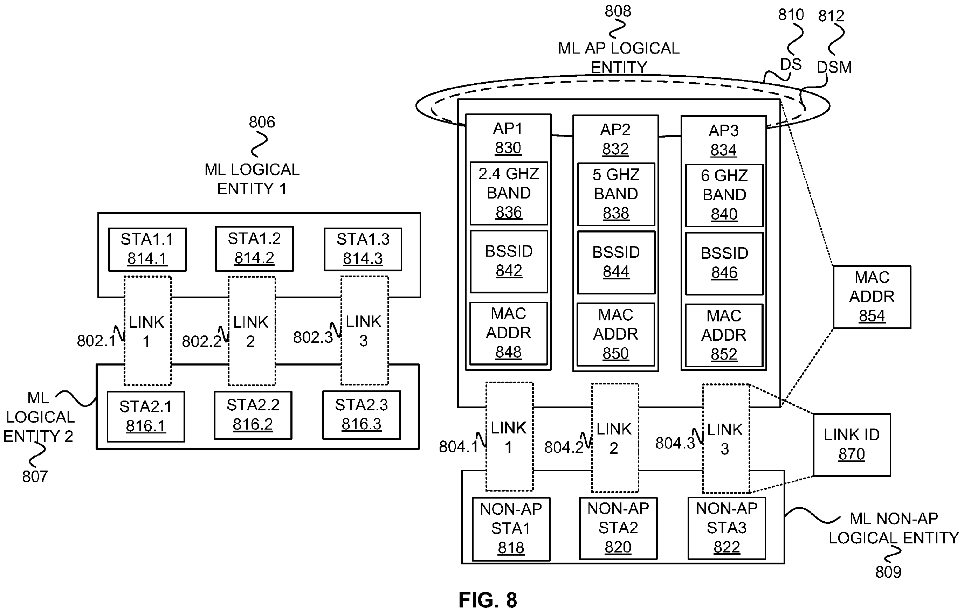

FIG. 8 illustrates multi-link devices (MLD)s 800, in accordance with some embodiments. Illustrated in FIG. 8 is ML logical entity 1 806, ML logical entity 2 807, ML AP logical entity 808, and ML non-AP logical entity 809. The ML logical entity 1 806 includes three STAs, STA1.1 814.1, STA1.2 814.2, and STA1.3 814.3 that operate in accordance with link 1 802.1, link 2 802.2, and link 3 802.3, respectively.

The Links are different frequency bands such as 2.4 GHz band, 5 GHz band, 6 GHz band, and so forth. ML logical entity 2 807 includes STA2.1 816.1, STA2.2 816.2, and STA2.3 816.3 that operate in accordance with link 1 802.1, link 2 802.2, and link 3 802.3, respectively. In some embodiments ML logical entity 1 806 and ML logical entity 2 807 operate in accordance with a mesh network. Using three links enables the ML logical entity 1 806 and ML logical entity 2 807 to operate using a greater bandwidth and more reliably as they can switch to using a different link if there is interference or if one link is superior due to operating conditions.

The distribution system (DS) 810 indicates how communications are distributed and the DS medium (DSM) 812 indicates the medium that is used for the DS 810, which in this case is the wireless spectrum.

ML AP logical entity 808 includes AP1 830, AP2 832, and AP3 834 operating on link 1 804.1, link 2 804.2, and link 3 804.3, respectively. ML AP logical entity 808 includes a MAC address 854 that may be used by applications to transmit and receive data across one or more of AP1 830, AP2 832, and AP3 834. Each link may have an associated link ID. For example, as illustrated, link 3 804.3 has a link ID 870.

AP1 830, AP2 832, and AP3 834 includes a frequency band, which are 2.4 GHz band 836, 5 GHz band 838, and 6 GHz band 840, respectively. AP1 830, AP2 832, and AP3 834 includes different BSSIDs, which are BSSID 842, BSSID 844, and BSSID 846, respectively. AP1 830, AP2 832, and AP3 834 includes different media access control (MAC) address (addr), which are MAC adder 848, MAC addr 850, and MAC addr 852, respectively. The AP 502 is a ML AP logical entity 808, in accordance with some embodiments. The STA 504 is a ML non-AP logical entity 809, in accordance with some embodiments.

The ML non-AP logical entity 809 includes non-AP STA1 818, non-AP STA2 820, and non-AP STA3 822. Each of the non-AP STAs may be have MAC addresses and the ML non-AP logical entity 809 may have a MAC address that is different and used by application programs where the data traffic is split up among non-AP STA1 818, non-AP STA2 820, and non-AP STA3 822.

The STA 504 is a non-AP STA1 818, non-AP STA2 820, or non-AP STA3 822, in accordance with some embodiments. The non-AP STA1 818, non-AP STA2 820, and non-AP STA3 822 may operate as if they are associated with a BSS of AP1 830, AP2 832, or AP3 834, respectively, over link 1 804.1, link 2 804.2, and link 3 804.3, respectively.

A Multi-link device such as ML logical entity 1 806 or ML logical entity 2 807, is a logical entity that contains one or more STAs 814, 816. The ML logical entity 1 806 and ML logical entity 2 807 each has one MAC data service interface and primitives to the logical link control (LLC) and a single address associated with the interface, which can be used to communicate on the DSM 812. Multi-link logical entity allows STAs 814, 816 within the multi-link logical entity to have the same MAC address. In some embodiments a same MAC address is used for application layers and a different MAC address is used per link.

In infrastructure framework, ML AP logical entity 808, includes APs 830, 832, 834, on one side, and ML non-AP logical entity 809, which includes non-APs STAs 818, 820, 822 on the other side.

ML AP device (AP MLD): is a ML logical entity, where each STA within the multi-link logical entity is an EHT AP 502, in accordance with some embodiments. ML non-AP device (non-AP MLD) A multi-link logical entity, where each STA within the multi-link logical entity is a non-AP EHT STA 504. AP1 830, AP2 832, and AP3 834 may be operating on different bands and there may be fewer or more APs. There may be fewer or more STAs as part of the ML non-AP logical entity 809.

In some embodiments the ML AP logical entity 808 is termed an AP MLD or MLD. In some embodiments ML non-AP logical entity 809 is termed a MLD or a non-AP MLD. Each AP (e.g., AP1 830, AP2 832, and AP3 834) of the MLD sends a beacon frame that includes: a description of its capabilities, operation elements, a basic description of the other AP of the same MLD that are collocated, which may be a report in a Reduced Neighbor Report element or another element such as a basic multi-link element 1600. AP1 830, AP2 832, and AP3 834 transmitting information about the other APs in beacons and probe response frames enables STAs of non-AP MLDs to discover the APs of the AP MLD.

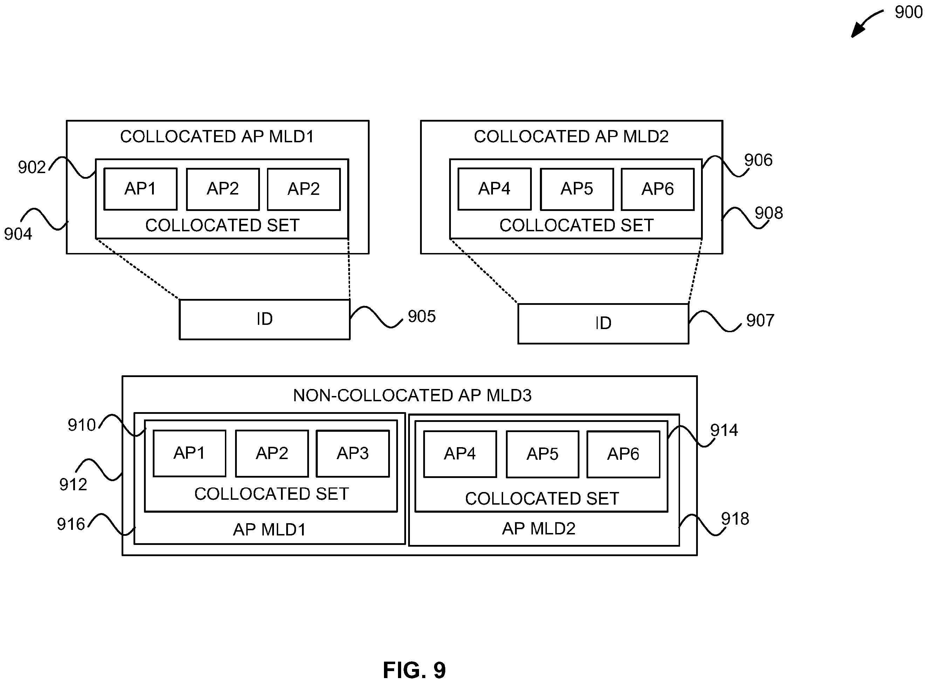

FIG. 9 illustrates collocated and non-collated MLDs, in accordance with some embodiments. The collocated AP MLD1 904 includes a collocated set 902 of APs, which are AP1, AP2, and AP3. The collocated AP MLD2 908 includes a collocated set 906 of APs, which are AP4, AP5, and AP6. The collocated AP MLD 1 904 and collocated AP MLD 1 908 are ML AP logical entities 808 and/or MLDs as disclosed in conjunction with IEEE P802.11be^{™}/D3.0, January 2023, in accordance with some embodiments. The AP1..AP6 may be the same or similar as AP 502.

The non-collocated AP MLD3 912 comprises AP MLD1 916, which comprises collocated set 914, and AP MLDD2 918, which comprises collocated set 914. The non-collocated AP MLD3 912 may be as disclosed in conjunction with IEEE P802.11be^{™}/D3.0, January 2023 ("IEEE 802.11be") or Wi-Fi 8, in accordance with some embodiments. As an example, AP MLD1 916 and AP MLD2 918 may be implemented on separate electronic devices and may be separated physically from one another. The non-collocated AP MLD3 may include hundreds or more AP MLDs. APs 502 such as AP1, AP2, ..., AP6 may be termed as affiliated if they are associated with the same MLD.

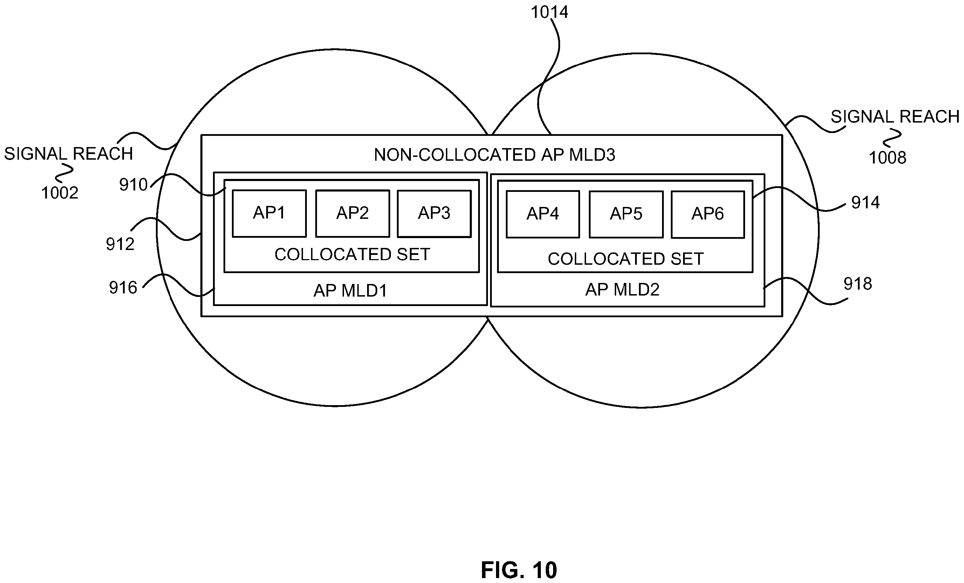

FIG. 10 illustrates a non-collocated MLD with signal reach 1002, 1008, in accordance with some embodiments. Signal reach 1008 is the signal reach or signal coverage of AP MLD2 918 and signal reach 1002 is the signal reach of AP MLD1 916. The signal reach 1002 and signal reach 1008 may or may not overlap for a non-collocated MLDs AP MLD1 916 and AP MLD2 918. Collocated set 914 and collocated set 910 are termed overlapping if the signal reach 1008 and signal reach 1002 overlap.

In some embodiments, non-collocated AP MLD3 1014 may include many non-collocated MLDs. In some embodiments, non-collocated AP MLD3 1014 provides for STAs 504 more mobility with low, or near zero latency and with near lossless packet transitions between APs 502 in different locations. The APs 502 and/or STAs 504 may be part of MLDs. For example, there may be many APs 502 in an office building. The non-collocated AP MLD3 1014 may include APs 502 from around the building enabling a STA 504 to transition between APs 502 with fewer transition transmissions. In some embodiments, the non-collocated MLDs, such as non-collocated AP MLD3 1014 may include many and even all of the APs 502 being affiliated in a same ESS. A critical update procedure is disclosed for collocated AP MLDs in IEEE 802.11be.

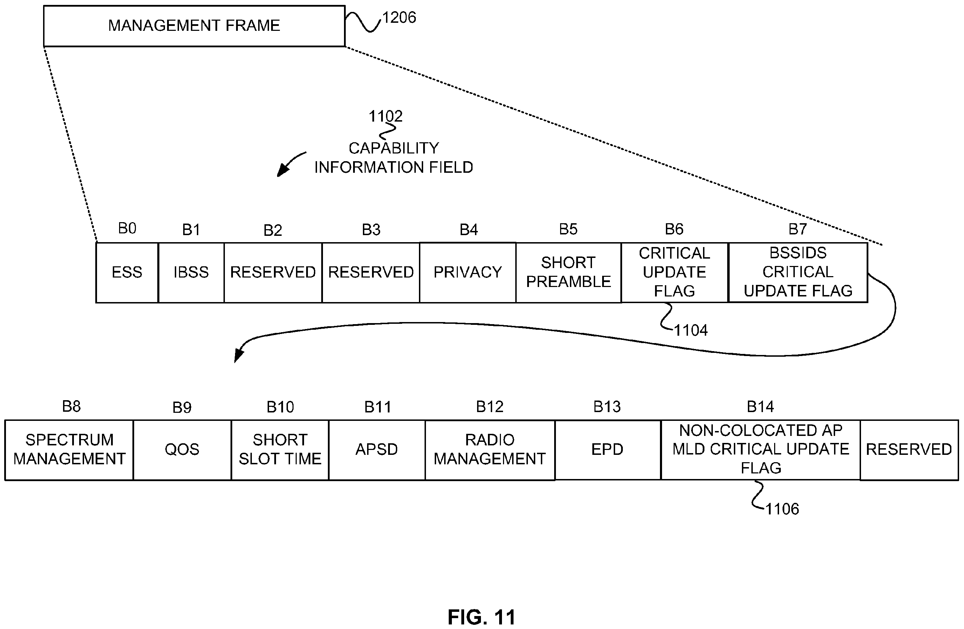

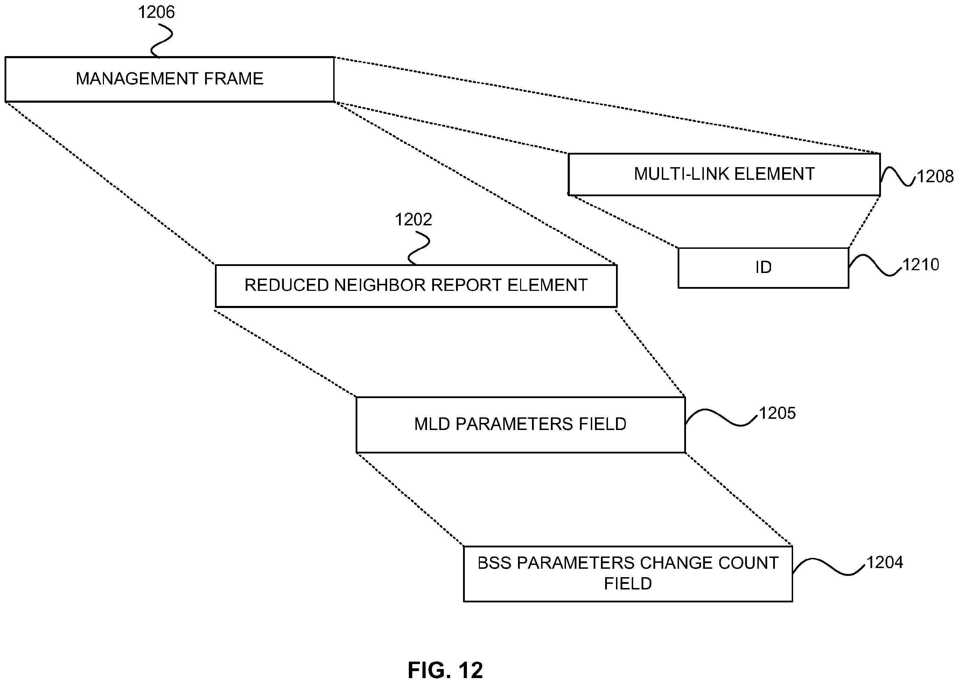

FIG. 11 illustrates a capabilities information field 1102, in accordance with some examples. FIG. 12 illustrates a reduced neighbor report element 1202, in accordance with some examples.

In some examples, APs of a collocated AP MLD, e.g., 904 and 908, include in their management frame 1206, e.g., beacon frames and Probe Response frames, the following: (1) A basic per-AP information about each affiliated AP of the AP MLD in the Reduced Neighbor report element 1202, including a field for each AP called BSS Parameters Change Count field 1204 that is incremented every time there is a critical update (a parameter that changed for the corresponding AP). (2) A Critical Update flag 1104 field in the Capability Information field 1102 (or corresponding one for a non-transmitted BSSID) that is set to 1 for a specific duration when one of the affiliated AP's of the AP MLD of the transmitting AP has a new critical update and incremented its BSS Parameter Change Count field 1204. The fields or subfields of the capability information field 1102 may be as described in conjunction with IEEE 802.11be. The non-collocated AP MLD critical update flag subfield is set if the critical change is less than a duration of a threshold duration.

A technical challenge is how to provide a critical update procedure for non-collocated MLDs. There may be many affiliated APs, which may make it impractical to include the fields described above.

In some examples, an affiliated AP 502 with a non-collocated AP MLD 912 transmits advertisements of basic per-AP information about affiliated APs of the non-collocated AP MLD 912 in the Reduced Neighbor report (RNR) 1202 in management frames 1206 such as Beacon frames and Probe Response frames.

Some examples only mandate inclusion of basic per-AP Information about APs, e.g., AP1 .. AP6, affiliated with the non-collocated AP MLD 912 which belong to the same collocated set 910, 914, as the AP sending the frame (transmitting AP). Further, as these APs are also all the APs affiliated with the collocated AP MLD which overlaps, additional information is not required (except for discovery of non-collocated AP MLD. Additionally, and optionally, the AP may include per-AP information in the RNR 1202 for other APs affiliated with the non-collocated AP MLD.

In some examples, an affiliated AP 502 with a non-collocated AP MLD 912 is mandated to include basic per-AP Information about APs affiliated with the non-collocated AP MLD which belong to the same collocated set as the AP sending the frame (transmitting AP). The APs are also all the APs affiliated with the collocated AP MLD that overlaps. In some examples, the affiliated AP 502 with a non-collocated AP MLD 912 includes, or it is mandatory to include, basic per-AP Information about APs affiliated with the noncollocated AP MLD that belong to other/different collocated sets, but only if there is a non-AP MLD associated with the non-collocated AP MLD and that has the link of the transmitting AP as a setup link and the link of this additional affiliated AP as setup link. Thus, per-AP basic information is included in the RNR 1202 for affiliated APs that associated or reassociated non-AP MLDs would track for their critical update operation. The AP may include per-AP information in the RNR 1202 for other APs affiliated with the non-collocated AP MLD.

In some examples, critical update flags are required to signal that critical updates are pending. In some example, the Capability Information field 1102 includes non-collocated AP MLD Critical Update flag 1106 field (1 bit field), which may be bit 14 of the capability information field 1102 or another one or more bits of the capability information field 1102 or another field or element transmitted by the AP 502 of the non-collocated AP MLD, e.g., non-collocated AP MLD3 912.

In some examples, the non-collocated AP MLD Critical Update flag 1106 field or bit would is set to 1 if there is a critical update for an affiliated AP that belong to other/different collocated set 910, 914. The non-collocated AP MLD Critical Update flag 1106 field or bit is set to 1 if there is a non-AP MLD associated with the non-collocated AP MLD and that has the link of the transmitting AP as a setup link and the link of this additional affiliated AP as setup link.

In some examples, t non-AP MLD that is associated with the non-collocated AP MLD with setup links in the same collocated set as the transmitting AP and in another collocated set will track the 2 Critical Update flags: (1) the first critical update flag is termed Critical Update flag 1104, which is used to track if there was a critical update to affiliated APs in the same collocated set as the transmitting AP. (2) The second, critical Update flag is termed Non-collocated AP MLD Critical Update flag 1106, which is used to track if there was a critical update to affiliated APs in a different collocated set 910, 914.

In some examples, if there is a critical update for an affiliated AP in a different collocated set and as the per-AP information in RNR is not present for this AP, the non-AP MLD is not able to determine which AP has critical update.

In some examples, the non-AP MLD may determine which AP has the critical update using one or more of the following three methods.

Method 1: If there is a critical update for an affiliated AP in a different collocated set 910, 914 and which is not included in Beacon frames and Probe Response frames, then during the time the Non-collocated AP MLD Critical Update Flag 1106 field is set to 1 to announce a critical update for this AP MLD: the per-AP basic information shall be included in the RNR 1202 in the management frame 1206 such as a Beacon or a Probe Response frame for this affiliated AP until the Non-collocated AP MLD Critical Update flag 1106 is back to 0.

Method 2: If there is a critical update for an affiliated AP in a different collocated set 910, 914 and which is not included in Beacon frames and Probe Response frames, then during the time the Non-collocated AP MLD Critical Update Flag 1106 field is set to 1 to announce a critical update for this AP MLD: the identification (ID) 1210 of the Affiliated AP or the ID 1210 of the collocated set (corresponding to the ID of the collocated AP MLD that overlaps) is included in the Multi-Link element 1208 for the collocated AP MLD of the transmitting AP or for the Non-collocated AP MLD of the transmitting AP (if defined). The ID 905, 907 of the corresponding collocated set 910, 914 can be the MLD MAC address of the overlapping collocated AP MLD or a unique collocated set ID.

The ID of the corresponding affiliated AP is derived from the ID of the collocated set and the link ID of the affiliated AP within the collocated set. The BSS Parameter Change Count for the affiliated AP can also be included in the Multi-link element 1208 (MLE).

Method 3: Not include any other additional information and let the non-AP MLD determine and search for the AP for which there was a critical update, as it is likely that the non-AP MLD will only be associated with a non-collocated AP MLD with a setup link on not more than 2 collocated sets.

In some embodiments, a new flag in the Capability Information field 1102 termed Non-collocated AP MLD Critical Update flag 1106 field (1 or more bits field). The AP is configured to set the field to 1 if there was a critical update for an affiliated AP that belong to another or different collocated set 910, 914. In some embodiments, the AP is configured to set the field to a 1 if there is a non-AP MLD associated with the non-collocated AP MLD that has the link of the transmitting AP as a setup link and the link of this additional affiliated AP as setup link. For example, if non-AP STA1 818 has link 1 804.1 as a setup link and a link (not illustrated) with an AP in collocated set. In some examples, a setup link is a link between a non-AP MLD and a non-collocated (or collocated) AP MLD where a multi-link setup procedure has been performed in accordance with IEEE 802.11be.

A non-AP MLD that is associated with the non-collocated AP MLD with setup links in the same collocated set as the transmitting AP and in another collocated set will track the 2 Critical Update flags: (1) The first critical update flag is termed Critical Update flag 1104, which is used to track if there was a critical update to affiliated APs in the same collocated set as the transmitting AP. (2) The second Critical Update flag 1104 is termed Non-collocated AP MLD Critical Update flag 1106, which is used to track if there was a critical update to affiliated APs in a different collocated set.

If there is a critical update for an affiliated AP in a different collocated set, the per-AP information in RNR 1202 is present for this AP, and the non-AP MLD will be able to determine which AP has critical update by checking the BSS Parameter Change Count field 1204 in the per-AP Basic information in the RNR 1202.

In some examples, a field in the Capability Information field 1102 (or a field in the corresponding non-transmitted BSSID field) is set to 1 for a specific duration when one of the affiliated APs of the AP MLD of the transmitting AP had a new critical update and incremented its BSS Parameter Change Count field 1204.

In some examples, an AP 502, e.g., AP1 ... AP6, affiliated with an non-collocated AP MLD, e.g., 912, sets the Critical Update Flag 1104 subfield to 1 if there is a change to a value carried in the BSS Parameters Change Count field 1204 of the MLD Parameters field 1205 in the Reduced Neighbor Report element 1202 for any reported AP 502 affiliated with the same non-collocated AP MLD, e.g., 912, as the AP 502 and that corresponds to a link that is a setup link for an associated non-AP MLD that also has the link of the transmitting AP 502 as a setup link. Otherwise, the AP 502 sets the subfield to 0. In some examples, a setup link is a link 804 where a multi-link setup or re-setup procedure in accordance with IEEE 802.11be is successfully performed, e.g., with the non-collocated AP MLD for APs that are part of the same collocated set 910, 914 and for APs that are in different collocated sets 910, 914.

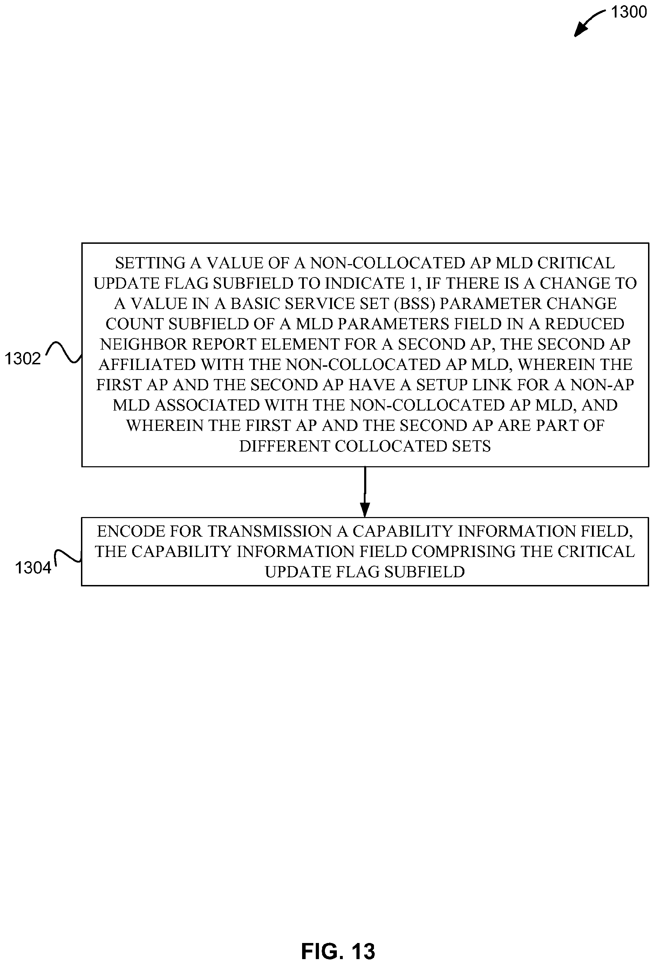

FIG. 13 illustrates a method 1300 for critical updates for non-collocated AP MLDs, in accordance with some embodiments. The method 1300 begin at operation 1302 with an AP of a non-collocated AP MLD setting a value of a non-collocated AP MLD critical update flag subfield to indicate a predetermined value, e.g., 1, if there is a change to a value in a basic service set (BSS) parameter change count subfield of a MLD parameters field in a reduced neighbor report element for a second AP, the second AP affiliated with the non-collocated AP MLD, where the first AP and the second AP have a setup link for a non-AP MLD associated or reassociated with the non-collocated AP MLD, and where the first AP and the second AP are part of a different collocated sets.

The method 1300 continues at operation 1304 with encoding for transmission a capability information field, the capability information field comprising the critical update flag subfield. The method 1300 may be performed by an apparatus of a first AP of a non-collocated AP MLD such as non-collocated AP MLD3 912, collocated AP MLD 1 904, and/or collocated AP MLD2 908.

The method 1300 may include one or more additional instructions. The method 1300 may be performed in a different order. One or more of the operations of method 1300 may be optional.

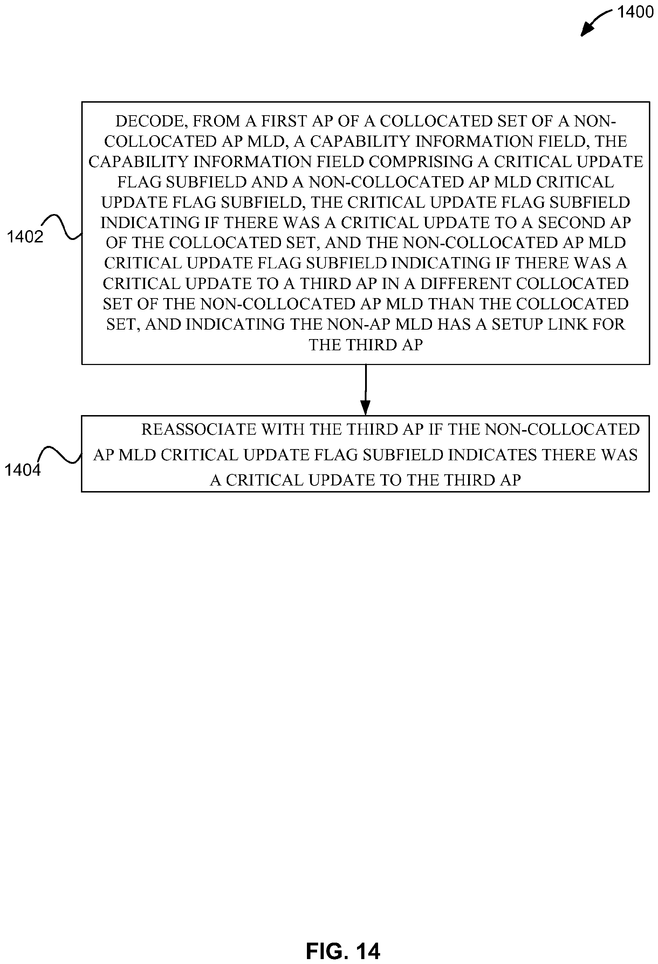

FIG. 14 illustrates a method 1400 for critical updates for non-collocated AP MLDs, in accordance with some embodiments. The method 1400 begin at operation 1402 with a STA of a non-AP MLD decode, from a first AP of a collocated set of a non-collocated AP MLD, a capability information field, the capability information field comprising a critical update flag subfield and a non-collocated AP MLD critical update flag subfield, the critical update flag subfield indicating if there was a critical update to a second AP of the collocated set, and the non-collocated AP MLD critical update flag subfield indicating if there was a critical update to a third AP in a different collocated set of the non-collocated AP MLD than the collocated set, and indicating the non-AP MLD has a setup link for the third AP.

The method 1400 continues at operation 1304 with reassociating with the third AP if the non-collocated AP MLD critical update flag subfield indicates there was a critical update to the third AP. In some examples, operation 1304 may decode a beacon frame from the third AP and adjust the parameters based on the beacon frame rather than reassociating.

The method 1400 may be performed by an apparatus of a STA of a non-AP MLD such as ML non-AP logical entity 808 or an apparatus of a STA 504. The method 1400 may include one or more additional instructions. The method 1400 may be performed in a different order. One or more of the operations of method 1400 may be optional.

The Abstract is provided to comply with 37 C.F.R. Section 1.72(b) requiring an abstract that will allow the reader to ascertain the nature and gist of the technical disclosure. It is submitted with the understanding that it will not be used to limit or interpret the scope or meaning of the claims. The following claims are hereby incorporated into the detailed description, with each claim standing on its own as a separate embodiment.

## Claims

1. An apparatus of a first access point (AP) of a non-collocated AP multi-link device (MLD), the apparatus comprising memory; and processing circuitry coupled to the memory, the processing circuitry configured to:
set a value of a non-collocated AP MLD critical update flag subfield to indicate a predetermined value, if there is a change to a value in a basic service set (BSS) parameter change count subfield of a MLD parameters field in a reduced neighbor report element for a second AP, the second AP affiliated with the non-collocated AP MLD, wherein the first AP and the second AP have a setup link for a non-AP MLD associated with the non-collocated AP MLD, and wherein the first AP and the second AP are part of different collocated sets; and
encode for transmission a capability information field, the capability information field comprising the critical update flag subfield.

2. The apparatus of claim 1, wherein encode for transmission further comprises:
encode for transmission a beacon frame or a probe response frame to comprise the capability information field.

3. The apparatus of claim 1, wherein the processing circuitry is further configured to:
associate or reassociate with the non-AP MLD for the first AP and the second AP,
wherein the predetermined value is 1.

4. The apparatus of claim 1, wherein the processing circuitry is further configured to:
encode for transmission the reduced neighbor report element for the second AP in a beacon frame or a probe response frame.

5. The apparatus of claim 1, wherein the set the value of the non-collocated AP MLD critical update flag subfield further comprises:
set the value of a non-collocated AP MLD critical update flag subfield to indicate 1, if there is the change to the value in the BSS parameter change count subfield of the MLD parameters field in the reduced neighbor report element for the second AP, the second AP affiliated with the non-collocated AP MLD, wherein the first AP and the second AP have the setup link for a non-AP MLD associated with the non-collocated AP MLD, and wherein a duration since the change is less than a threshold duration.

6. The apparatus of claim 1, wherein the processing circuitry is further configured to:
encode for transmission a reduced neighbor report element for each AP affiliated with the non-collocated AP MLD that is part of a collocated set of the first AP and for each AP affiliated with a different collocated set, wherein the different collocate set overlaps with the collocated set.

7. The apparatus of any of claims 1-6, wherein the processing circuitry is further configured to:
set a value of a critical update flag subfield to indicate 1, if there is a change to a value in the BSS parameter change count subfield of the MLD parameters field in the reduced neighbor report element for an AP affiliated with the non-collocated AP MLD that is part of a collocated set of the first AP or is part of a different collocated set that overlaps in signal coverage with the collocated set.

8. The apparatus of any of claims 1-6, wherein the processing circuitry is further configured to:
encode for transmission a reduced neighbor report element for APs affiliated with the non-collocated AP MLD that are part of a collocated set of the first AP and APs affiliated with a different collocated set wherein the first AP and a corresponding AP of the APs have a setup link for the non-AP MLD associated with the non-collocated AP MLD and a value in a corresponding BSS parameter change count subfield is changed.

9. The apparatus of any of claims 1-6, wherein the processing circuitry is further configured to:
encode for transmission multi-link element (MLE) comprising an identification (ID) of the second AP.

10. The apparatus of claim 9, wherein the ID is a MLD media access control (MAC) of an MLD of the second AP, a link ID of the second AP, or an ID of a collocated set of the second AP.

11. The apparatus of claim 9, wherein the processing circuitry is further configured to:
encode for transmission the MLE to further comprise the BSS parameter change count subfield of the second AP.

12. A non-transitory computer-readable storage medium that stores instructions for execution by one or more processors of a first access point (AP) of a non-collocated AP multi-link device (MLD), the instructions to configure the one or more processors to:
set a value of a non-collocated AP MLD critical update flag subfield to indicate 1, if there is a change to a value in a basic service set (BSS) parameter change count subfield of a MLD parameters field in a reduced neighbor report element for a second AP, the second AP affiliated with the non-collocated AP MLD, wherein the first AP and the second AP have a setup link for a non-AP MLD associated with the non-collocated AP MLD, and wherein the first AP and the second AP are part of different collocated sets; and
encode for transmission a capability information field, the capability information field comprising the critical update flag subfield.

13. The non-transitory computer-readable storage medium of claim 12, wherein the instructions further comprise:
encode for transmission a beacon frame or a probe response frame to comprise the capability information field.

14. An apparatus of a non-access point (AP) multi-link device (MLD)(non-AP MLD), the apparatus comprising memory; and processing circuitry coupled to the memory, the processing circuitry configured to:
decode, from a first AP of a collocated set of a non-collocated AP MLD, a capability information field, the capability information field comprising a critical update flag subfield and a non-collocated AP MLD critical update flag subfield, the critical update flag subfield indicating if there was a critical update to a second AP of the collocated set, and the non-collocated AP MLD critical update flag subfield indicating if there was a critical update to a third AP in a different collocated set of the non-collocated AP MLD than the collocated set, and indicating the non-AP MLD has a setup link for the third AP; and
reassociate with the third AP if the non-collocated AP MLD critical update flag subfield indicates there was a critical update to the third AP.

15. The apparatus of claim 14, wherein the processing circuitry is further configured to:
decode, from the first AP, a reduced neighbor report element for the third AP in a beacon frame or a probe response frame.
